# EUROPEAN PATENT SPECIFICATION

(11) **EP 2 943 613 B1**
(45) Date of publication and mention of the grant of the patent: **25.09.2019**
(21) Application number: 13871274.0
(22) Date of filing: 19.12.2013
(51) Int. Cl.: D21C 9/18, D21C 9/06, B01D 33/72, D21D 1/40, D21F 1/02, D21F 1/04, D21F 1/66, D21F 1/74

(54) **AN APPARATUS FOR WASHING AND/OR DEWATERING OF CELLULOSE PULP**
VORRICHTUNG ZUM WASCHEN UND/ODER ENTWÄSSERN VON ZELLSTOFF
APPAREIL DE LAVAGE ET/OU D'ESSORAGE DE PÂTE DE CELLULOSE

(30) Priority: 11.01.2013 SE 1350030
(43) Date of publication of application: 18.11.2015
(73) Proprietor: Valmet AB, 851 94 Sundsvall (SE)
(72) Inventor: LÖÖF, Tobias, S-860 35 Söråker (SE); PETTERSSON, Patrik, S-865 32 Alnö (SE); ORGÅRD, Jonas, S-860 13 Stöde (SE); LÖVGREN, Hans, S-855 90 Sundsvall (SE); WALLIN, Per, S-865 32 Alnö (SE); NYKVIST, Peter, S-861 34 Timrå (SE); MAGNUSSON, Jonas, S-856 53 Sundsvall (SE)
(86) International application number: PCT/SE2013/051570
(87) International publication number: WO 2014/109693

(56) References cited:
- WO-A1-00/75419
- WO-A1-88/05840
- WO-A1-2008/088279
- WO-A1-2009/131527
- WO-A1-2009/131527
- CA-A- 1 063 523
- US-A- 3 772 144
- US-A- 4 098 642
- US-A- 4 343 708
- US-A- 4 750 340
- US-A- 5 589 035

## Description

### TECHNICAL FIELD

The invention relates to an apparatus for washing and/or dewatering of cellulose pulp, according to the preamble of claim 1.

### BACKGROUND

Pulp washing is a key operation in the pulping line. There are many different types of washing apparatuses available, some of which are based on press washing and comprise means for pressing the pulp to remove liquid. After pressing, the pulp can, if suitable, be diluted to a desired consistency.

A well-known washing apparatus is a twin-roll press of the general type disclosed in US 3,980,518, for example. It has two counter-rotating rolls with perforated outer surfaces. A web of pulp is formed on the respective rolls and is transported in the direction of rotation in a vat partially surrounding the rolls, to the so-called press nip between the rolls. The liquid removed from the pulp, i.e. the filtrate, passes through the perforated roll surface in a radial inwards direction and is led to the ends of the press roll, where it is output. Washing liquid or other treatment liquid may be supplied to the pulp web through inlets in the vat. The twin-roll press uses the washing principles of *displacement*, where dirty liquid (liquor) in the pulp is replaced by cleaner wash liquid added to the vat, and *pressing*, where dirty liquid is pressed (squeezed) out from the pulp, in particular at the press nip.

The incoming pulp can be distributed lengthwise onto the respective press rolls by means of a distribution device, for example using a rotating screw, such as the device shown in EP 1 229 164 B1 or the device shown in SE 532 366 C2. There is a problem with the distribution of pulp along the total length of the press roll with a danger that the end parts of the press rolls operate without pulp.

In SE 516 335 a device is described for feeding of cellulose pulp in the form of a pulp web. In this device the outlet includes restrictions in the form of holes, which are arranged along the generator of the envelope surface of the inlet box. The holes are preferably arranged so that their diameter is smaller than the distance between them. In that way, the pressure is maintained in the inlet box such that the pulp is forced out of the outlet and is uniformly distributed along the width of the pulp web. The holes have, however, a tendency to plug.

US4750340 discloses an apparatus for treating a fiber suspension comprising a trough in which a drum is rotatably arranged. A supply screw is arranged to supply material to an inlet gap between the drum and the trough via a horizontal inlet channel having the same width as the inlet gap. The inlet gap is adjustable to suit the current operating conditions.

US3772144 discloses an apparatus for thickening and washing suspensions comprising at least one rotatably driven drum arranged in a vat. Arcuate baffles are arranged in the vat, where a first pressing baffle is pivotably mounted downstream of a fixed baffle. The fixed baffle and the first pressing baffle together have an arcuate length of greater than about 100 degrees of the drum circumference. The first pressing baffle is resiliently biased such that it gradually converges towards the drum in the clockwise direction of the drum driven rotation.

### SUMMARY

An object of the invention is to provide an improved pulp distribution device for an apparatus for washing and/or dewatering of cellulose pulp that solves the problem in prior art. This object is achieved in accordance with the appended claims.

The advantages are that the pulp distribution device will operate more filled than in earlier solutions. This leads to a better forming of the pulp web along the press roll also in the ends of the press roll, independent of the rotation speed of the press roll. This gives a higher capacity of the washing apparatus and a better washing. The formation of the pulp web will also be smoother, since the pulp is not torn from the pulp distribution device.

### BRIEF DESCRIPTION OF THE DRAWINGS

The invention, together with further objects and advantages thereof, may best be understood by reference to the following description and appended drawings, in which:
**Fig. 1** is a schematic cross-sectional view illustrating a twin-roll press with pulp distribution devices according to an exemplifying embodiment of the invention.
**Fig. 2** is a schematic cross-sectional view illustrating a pulp distribution device in a washing apparatus (partially shown) according to a first embodiment of the invention;
**Fig. 3** is a schematic cross-sectional view illustrating a pulp distribution device in a washing apparatus (partially shown) according to a second embodiment of the invention;
**Fig. 4** is a schematic cross-sectional view illustrating a pulp distribution device in a washing apparatus (partially shown) according to a third embodiment of the invention;
**Fig. 5** is a schematic cross-sectional view illustrating a pulp distribution device in a washing apparatus (partially shown) according to a fourth embodiment of the invention;
**Fig. 6** is a schematic cross-sectional view illustrating a pulp distribution device in a washing apparatus (partially shown) according to a fifth embodiment of the invention;
**Fig. 7** is a schematic cross-sectional view illustrating a pulp distribution device in a washing apparatus (partially shown) according to a sixth embodiment of the invention;

### DETAILED DESCRIPTION

In the drawings, similar or corresponding elements are denoted by the same reference numbers.

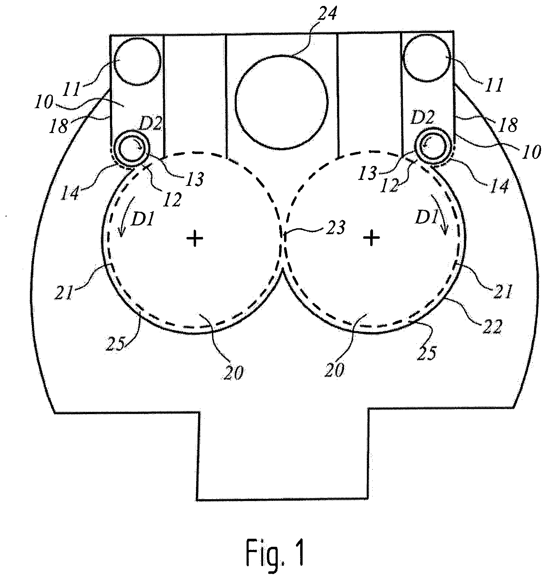

**Fig. 1** illustrates an apparatus 100 for the washing and/or dewatering of cellulose pulp. The apparatus 100 is in this example in the form of a twin-roll press 100. The apparatus 100 comprises two co-operating cylindrical press rolls 20. The two press rolls 20 are arranged to rotate in opposite directions during operation (as indicated by the arrows) and each has a first rotatable permeable surface 21, more specifically a perforated metal sheet or similar. The press rolls 20 are partially enclosed by a vat 22 (also known as trough) in the circumferential direction. The vat 22 comprises a vat wall 22 formed by guide surfaces and a vat chamber 25.

A pulp distribution device 10 is associated with each press roll 20. The pulp distribution device 10 is arranged at the upper portion of the press roll 20 for distribution of pulp onto the perforated roll surface 21. The pulp distribution device 10 comprises an elongated housing 18, extending lengthwise along the press roll 20. The pulp distribution device 10 is attached to the vat 22. During operation, pulp enters the pulp distribution device 10 via its inlet 11, which for example can be arranged at the middle of the twin-roll press 100 as seen in the longitudinal direction. The input consistency of the pulp is preferably in the range of 2-13%.

In the pulp distribution device 10, the pulp is distributed in the longitudinal direction and output through the outlet 12 during formation and dewatering of a pulp web on the first rotatable permeable surface 21 of the press roll 20.

A pulp transportation chamber 25 is defined as the chamber in which the pulp is transported in a pulp transportation direction, guided by a pulp transportation chamber wall 22 e.g. in the direction of rotation D1 to be pressed in a nip (also known as pinch) 23, where the distance between the press rolls 20 is smallest. In the example in Fig. 1, the pulp transportation chamber 25 is the same as the vat chamber 25, but the pulp transportation chamber may also include e.g. a pre-forming zone between the pulp distribution device 10 and the vat 22. Also the last part of the pulp distribution device 10 may in certain circumstances be considered to be included in the pulp transportation chamber. The pulp transportation chamber 25 has a chamber gap width Wv between the pulp transportation wall 22 and the first permeable surface 21 of the respective press roll 20.

Washing liquid may e.g. be supplied to the pulp web in the vat 22. The pulp is output by means of a discharge screw 24.

In Fig. 1, two press rolls 20, each provided with a pulp distribution device 10, are arranged next to each other, with the rotation centres in the same horizontal plane. The invention is also suitable for washing and/or dewatering apparatuses where, for example, the rolls are differently arranged, or only one perforated roll is used, as well as for another apparatus where pulp is dewatered on a first movable permeable surface, which is movable in other ways than rotatable.

The vat 22 may be formed by one continuous vat structure as in Fig. 1 or, alternatively, may comprise a number of vat segments linked together (not shown, a number of variants are known, compare e.g. WO 2009/075641). In the latter case, one or more vat segments may be movable to and from the press roll 20, for example so as to facilitate cleaning of the press roll. There could, for example, be one movable vat segment extending into each pulp distribution device 10, e.g. pivotally attached at one of its ends.

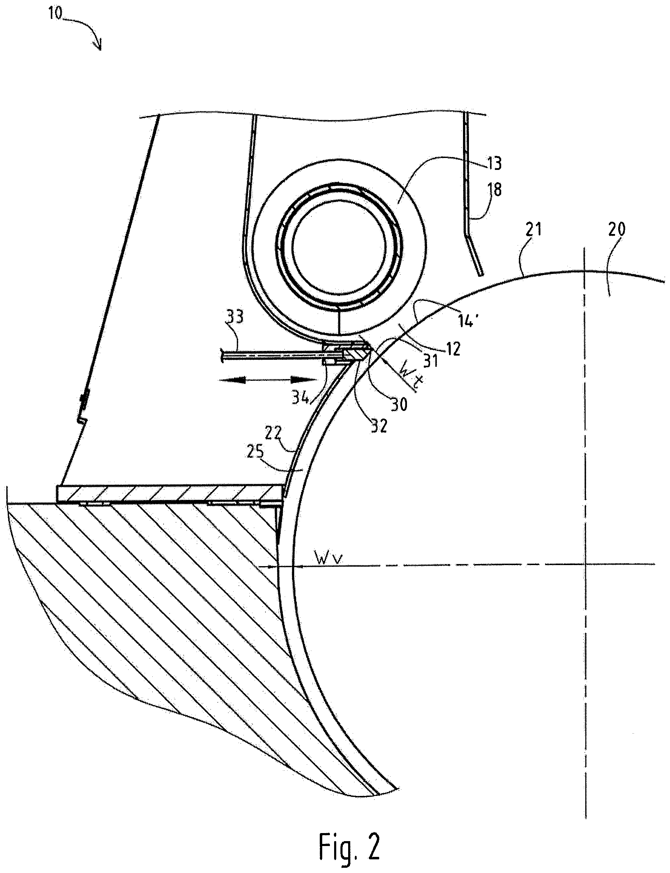

**Fig. 2** is a schematic cross-sectional view illustrating more in detail a pulp distribution device 10 according to an exemplifying embodiment of the invention. The pulp distribution device 10 is arranged in the apparatus 100, the upper left side of which is shown, so as to distribute pulp onto the first movable permeable surface 21 of the press roll 20, via the outlet 12. The pulp distribution device 10 may be of a type similar to e.g. the one described in SE 532 366 C2 and preferably comprises an elongated housing 18 with a rotatable screw 13 or other rotatable distribution means 13 inside, rotating in a direction of rotation D2. Especially when low concentrations are used, other stirring means are also possible to use instead of a rotatable distribution means. The pulp distribution device 10 extends along the entire length of the press roll 20 and the rotation axis of the rotatable distribution means 13 is parallel to the rotation axis of the press roll 20.

According to the invention it has been realised that the pulp volume flow into the pulp distribution device 10 should be at least equal to, but preferably higher than the pulp volume flow out from the pulp distribution device 10. Since there has to be an equal mass flow of dry pulp into and out from the pulp distribution device 10, an initial dewatering should be made through a second permeable surface 14 before the main dewatering made through the first permeable surface 21. This means it is preferred that the pulp distribution device 10 operates completely filled and has an internal pressure in order to better distribute the pulp and form a better pulp web along the total length of the press roll 20 also in the ends of the press roll 20. The pressure in the pulp distribution device 10 may also give an enhanced initial dewatering.

One way of making the pulp distribution device 10 operating completely filled would be to decrease the rotation speed of the press roll 20, so that a desired ratio between the pulp volume flow into the pulp distribution device 10 and the pulp volume flow out from the pulp distribution device 10 is achieved. However, it might not be possible due to other parameters, such as vat pressure.

A preferred way is to have a local throttle 31 in the pulp transportation chamber 25 near the outlet 12 of the pulp distribution device 10, i.e. that the chamber gap width Wv is locally smaller in a throttle gap width Wt near the outlet 12 of the pulp distribution device 10. This means that the throttle 31 may be positioned e.g. in the beginning of the vat, in the pre-forming zone, if any, or in the outlet 12 of the pulp distribution device 10. An example may be that the throttle gap width Wt is 30 mm, while the chamber gap width Wv in other places is 40 mm. Note, that this throttle construction is independent of the appearance of the chamber gap width Wv in the rest of the transportation chamber 22, which chamber gap width Wv in other places may be constant, diverging or converging from the pulp distribution device 10 to the nip 23.

The second permeable surface 14 is provided before the local throttle 31 as seen in the pulp transportation direction. As an example the second permeable surface 14 may be provided by having initial dewatering means already in the pulp distribution device 10 e.g. in the form of a permeable wall 14 in the casing 18 (see Fig. 1) or through a permeable surface (not shown) of the rotatable distribution means 13 or similar.

Another solution is to position the throttle 31, so that there is a dewatering segment 14' of the first permeable surface 21 at the outlet 12 of the pulp distribution device 10, which dewatering segment 14' works as a second permeable surface 14'. The dewatering segment 14' should be sufficiently large for forming and dewatering of pulp to start already before the throttle 31.

Since the first permeable surface 21 is moving, what is meant with the dewatering segment 14' is of course the segment of the first permeable surface 21 that at a particular moment is at the outlet 12 of the pulp distribution device 10 - i.e. the actual segment is constantly changing, when the first permeable surface 21 is moving.

In general, the result is better the closer the throttle 31 is positioned to the outlet 12 of the pulp distribution device 10 due to the risk of plugging before the throttle 31 if the distance between the throttle 31 and the outlet 12 is too big, but the invention will work at least in the distance of 0-0.5 m from the outlet 12 of the pulp distribution device 10. In the embodiment where the second permeable surface 14' is considered to be a segment of the first permeable surface 21, there should of course be a balance between having a sufficiently large dewatering segment 14' and having the throttle 31 sufficiently close to the outlet 12 of the pulp distribution device 10.

The throttle gap width Wt may be fixed and the throttle 31 simply formed as an edge, wedge, knife or similar 30 in the transportation chamber wall 22. It is, however, preferable that the throttle gap width Wt is adjustable and even more preferable that the throttle gap width Wt is adjustable during operation.

A simple solution for the adjustment could be to choose an appropriate number of shims to set the position of said edge, wedge or knife 30. More advanced embodiments can be seen in Figs. 2-7.

Fig. 2 discloses an embodiment, where the pulp distribution device 10 is provided with a separate throttle device 32. The edge 30 may e.g. be formed by a sealing. The position of the throttle device 32 may be adjusted from the outside with at least one rod 33 through a sealing lead-through 34. For simplicity, the edge 30 is preferably divided into a number of longitudinal segments of e.g. 1 m.

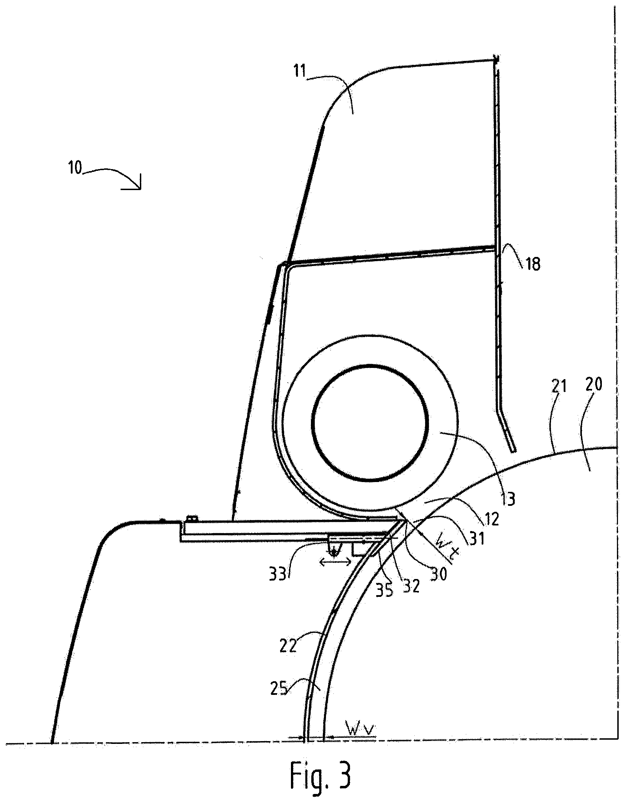

In **Fig. 3** is shown a longer variant of Fig. 2, where the edge 30 instead is formed by at least one plate, preferably divided into a number of longitudinal segments. The throttle device 32 is thus also provided with a clearance 35 after the throttle 31 in order to prevent plugging after the throttle device 32. The clearance angle is preferably 5-10°.

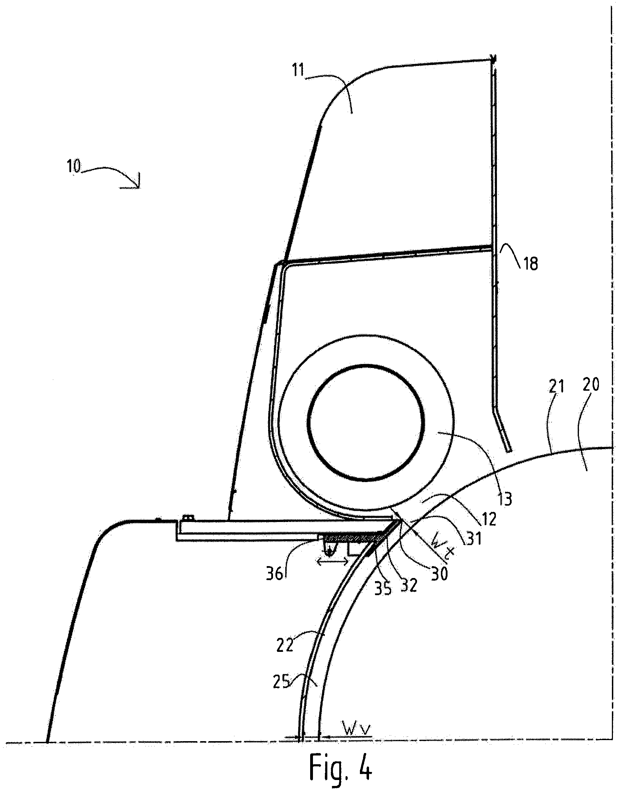

**Fig. 4** is a variant of Fig. 3, but where the throttle device 32 instead comprises two plates attached to each other, preferably also each divided into a number of longitudinal segments. The inner plate(s) 36 is/are instead of the rods 33.

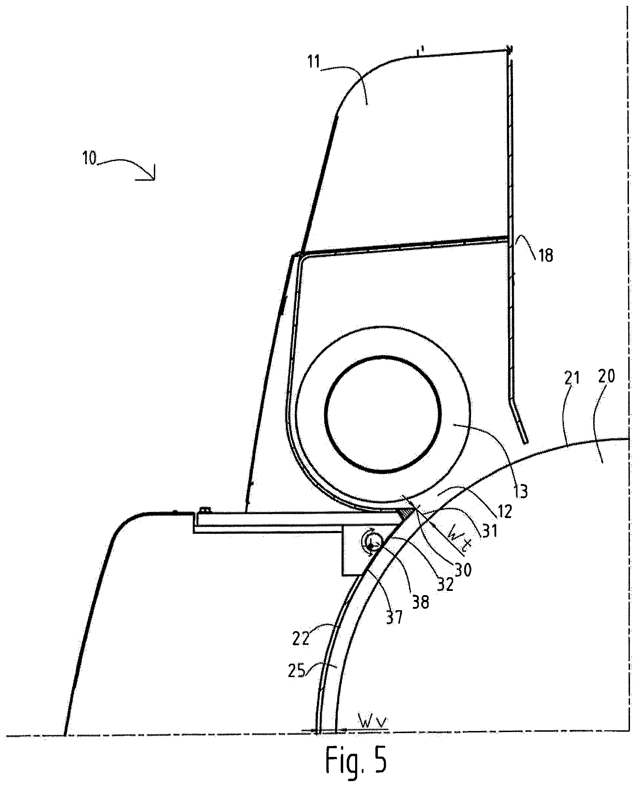

In the Figs. 2-4 the throttle device 32 was long, but comparatively small. In Fig. 5 is shown an embodiment where the throttle device 32 is somewhat larger. The part of the pulp transportation chamber wall 22 that is closest to the pulp distribution device 10 comprises at least one flexible plate 37 and a wedge 30. The position of the plate 37 may be adjusted by means of e.g. eccentric pucks 38 or similar. The pucks 38 are fixed to a shaft which goes through the apparatus 100. In this way adjustment of the throttle gap width Wt may be done e.g. by means of a not shown turning device on the side of the apparatus 100.

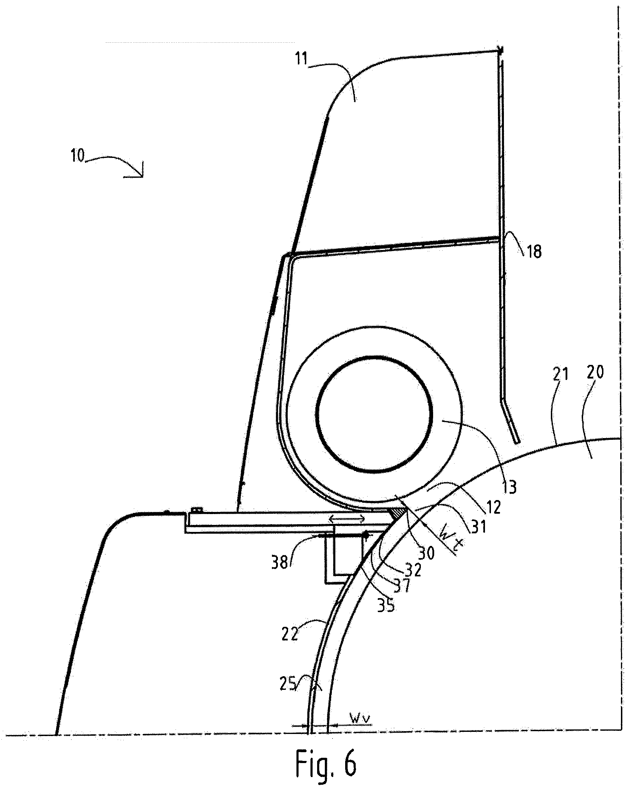

In **Fig. 6** is shown another variant of Fig. 5. In this embodiment the pulp transportation chamber wall part 22 which is closest to the pulp distribution device 10 is a separate plate 37 pivoted on rods 38. Sealing may be provided by e.g. a transit plate, a seal between the pivoted plate 37 and the casing 18 and sealed lead-throughs for the rods 38.

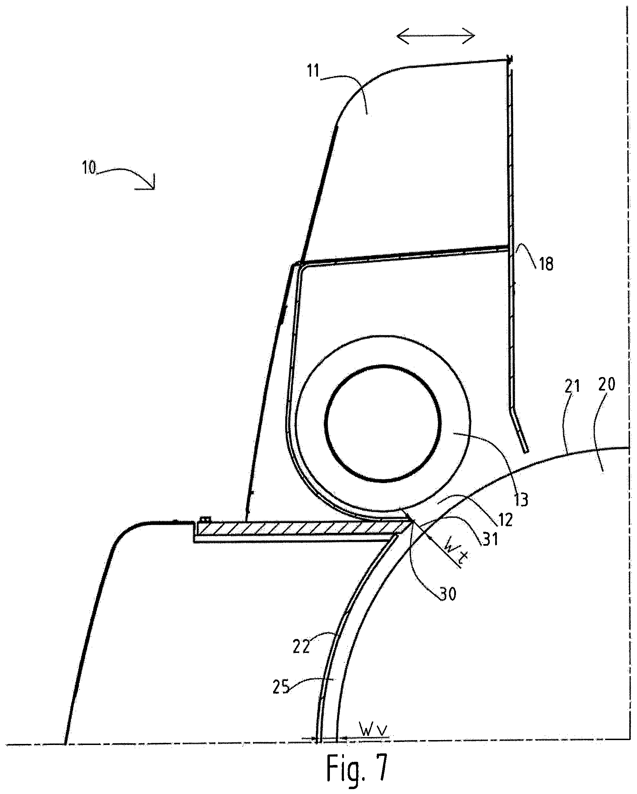

In **Fig. 7** is shown an embodiment where the whole pulp distribution device 10 is adjustable and may be moved closer to or further from the press roll 20 and thus the throttle gap width Wt may be adjusted to become larger or smaller.

The adjustment of the throttle gap width Wt may be made manually or automatically. If the adjustment is made automatically, then it is probably easiest to control the throttle gap width Wt on the pressure in the pulp distribution device 10. Another alternative is to control on the inlet ratio, i.e. the pulp volume flow into the pulp distribution device 10 divided with the pulp volume flow out from the pulp distribution device 10. The outlet pulp volume flow may be calculated as the rotational speed of the press roll 20 times the length of the press roll 20 times the throttle gap width Wt.

Yet other alternatives may be to control on pulp level or temperature in the pulp distribution device 10, on the vat pressure or on the pulp level in the ends of the press roll 20. Of course it is also possible to control on a combination of different parameters. It is, however, preferable to separate the pulp distribution device pressure control from the vat pressure control, since this enables to have a high pressure in the pulp distribution device 10 without necessitating having a high pressure in the vat 22.

The practical implementation of the automatic control may be to have one or more sensors (not shown) for the parameter measurement and/or calculation and to use e.g. one or more actuators, e.g. hydraulic, pneumatic and/or mechanic actuators, (not shown) for the throttle gap width adjustment, which actuator(s) is/are controlled by a controller (not shown). The controller may be stand-alone or integrated in a computer in a known manner, preferably as simple feedback control, but feed-forward control is also conceivable or a combination of both.

For the purpose of this disclosure, "longitudinal distribution of pulp" refers to distribution of pulp along/to the width of the pulp web formed on the first movable permeable surface. The pulp is thus distributed in a direction substantially transverse to the direction of movement of the movable first permeable surface. This means that the rotatable distribution means is arranged with its rotation axis substantially transverse to the direction of movement of the movable first permeable surface.

Accordingly, in a roll press application "longitudinal distribution of pulp" refers to distribution of pulp along/to the width of the pulp web formed on the press roll. The pulp is thus distributed in a direction substantially transverse to the rotational direction of the press roll. This means that the rotatable distribution means is arranged with its rotation axis substantially transverse to the rotational direction of the press roll. In a roll press application, longitudinal distribution of pulp consequently means lengthwise distribution of pulp, typically along the length of the press roll and along the length of the pulp distribution device.

Even though the description has been concentrated on an apparatus in the form of a twin roll press, the invention is by no means restricted to a twin roll press, but may be used in any apparatus where a pulp distribution device is distributing pulp on a first moving permeable surface.

The invention is of course not restricted to the shown embodiments, but may be varied within the scope of the claims.

## Claims

1. An apparatus (100) for washing and/or dewatering of cellulose pulp, which apparatus (100) comprises a first movable permeable surface (21); a pulp transportation chamber wall (22) and a pulp transportation chamber (25), which pulp transportation chamber (25) has a chamber gap width (Wv) between the pulp transportation chamber wall (22) and the first movable permeable surface (21); and a pulp distribution device (10) comprising an inlet (11) and an outlet (12), which pulp distribution device (10) is arranged to distribute pulp through its outlet (12) onto the first movable permeable surface (21), **characterized in that**
the pulp transportation chamber (25) is provided with a local throttle (31) having a throttle gap width (Wt), arranged at a distance of 0-0.5 m from the outlet (12) of the pulp distribution device (10), **in that**
a second permeable surface (14') for initial dewatering is provided before the local throttle (31), the second permeable surface (14') being a segment of the first movable permeable surface (21) near the outlet (12) of the pulp distribution device (10) and before the throttle (31), and **in that**
the pulp transportation chamber wall (22) is provided with a movable throttle device (32) for adjusting of the throttle gap width (Wt), the throttle gap width (Wt) being adapted so that the pulp volume flow into the pulp distribution device (10) is equal to or higher than the pulp volume flow out from the pulp distribution device (10) during operation, **in that**
the first movable permeable surface (21) is a first rotatable permeable surface (21) of a press roll (20), and **in that**
the pulp distribution device (10) is arranged at an upper portion of the press roll.

2. An apparatus (100) according to claim 1, **characterized in that** the pulp distribution device (10) also includes means for forming the pulp into a pulp web on the first movable permeable surface (21).

3. An apparatus (100) according to any of the claims 1-2, **characterized in that** the throttle gap width (Wt) is adapted so that the pulp distribution device (10) is kept substantially full during operation.

4. An apparatus (100) according to any of the claims 1-3, **characterized in that** the throttle gap width (Wt) is adapted so that there is an internal pressure created inside the pulp distribution device (10) during operation.

5. An apparatus (100) according to claim 1, **characterized in that** the movable throttle device (32) comprises one or more longitudinal segments .

6. An apparatus (100) according to any of the claims 1-5, **characterized in that** the movable throttle device (32) comprises a flexible or pivotable plate (37).

7. An apparatus (100) according to any of the claims 1-6, **characterized in that** the movable throttle device (32) comprises at least one plate arranged with a clearance (35) after the throttle (31).

8. An apparatus (100) according to any of the claims 1-7, **characterized in that** the movable throttle device (32) is movable by means of at least one of the group: at least one rod (33), at least one plate (36), at least one eccentric puck (38) on a shaft.

9. An apparatus (100) according to any of the claims 1-4, **characterized in that** the throttle gap width (Wt) is arranged to be fixed during operation and **in that** the throttle gap width (Wt) is arranged to be set by selecting an exchangeable part, preferably an appropriate number of shims.

10. An apparatus (100) according to any of the claims 1-9, **characterized in that** the apparatus (100) is provided with means for automatically controlling the throttle gap width (Wt) depending on at least one parameter.

11. An apparatus (100) according to claim 10, **characterized in that** the at least one parameter is at least one from the group: filling level of the pulp distribution device (10), pressure in the pulp distribution device (10), ratio between pulp volume flow into the pulp distribution device (10) and pulp volume flow out from the pulp distribution device (10), temperature in the pulp distribution device (10), pressure in the vat (22), pulp level in the ends of the first permeable surface (21).

## Patentansprüche

1. Vorrichtung (100) zum Waschen und/oder Entwässern von Zellstoff, wobei die Vorrichtung (100) eine erste bewegbare durchlässige Fläche (21); eine Zellstoff-Transportkammerwand (22) und eine Zellstoff-Transportkammer (25), wobei die Zellstoff-Transportkammer (25) eine Kammerspaltbreite (Wv) zwischen der Zellstoff-Transportkammerwand (22) und der ersten bewegbaren durchlässigen Fläche (21) aufweist; und eine Zellstoff-Verteilungsvorrichtung (10) umfasst, welche einen Einlass (11) und einen Auslass (12) umfasst, wobei die Zellstoff-Verteilungsvorrichtung (10) so eingerichtet ist, dass sie Zellstoff durch ihren Auslass (12) auf die erste bewegbare durchlässige Fläche (21) verteilt, **dadurch gekennzeichnet, dass**
die Zellstoff-Transportkammer (25) mit einer lokalen Drossel (31) versehen ist, die eine Drosselspaltbreite (Wt) aufweist und in einem Abstand von 0 m bis 0,5 m von dem Auslass (12) der Zellstoff-Verteilungsvorrichtung (10) angeordnet ist, dass
vor der lokalen Drossel (31) eine zweite durchlässige Fläche (14') zum anfänglichen Entwässern vorgesehen ist, wobei die zweite durchlässige Fläche (14') ein Segment der ersten bewegbaren durchlässigen Fläche (21) in der Nähe des Auslasses (12) der Zellstoff-Verteilungsvorrichtung (10) und vor der Drossel (31) ist, und dass
die Zellstoff-Transportkammerwand (22) mit einer bewegbaren Drosselvorrichtung (32) zum Einstellen der Drosselspaltbreite (Wt) versehen ist, wobei die Drosselspaltbreite (Wt) so angepasst ist, dass der Zellstoff-Volumenstrom in die Zellstoff-Verteilungsvorrichtung (10) während des Betriebs größer oder gleich dem Zellstoff-Volumenstrom aus der Zellstoff-Verteilungsvorrichtung (10) heraus ist, dass
die erste bewegbare durchlässige Fläche (21) eine erste drehbare durchlässige Fläche (21) einer Presswalze (20) ist, und dass
die Zellstoff-Verteilungsvorrichtung (10) an einem oberen Abschnitt der Presswalze angeordnet ist.

2. Vorrichtung (100) nach Anspruch 1, **dadurch gekennzeichnet, dass** die Zellstoff-Verteilungsvorrichtung (10) außerdem ein Mittel zum Formen des Zellstoffs zu einem Zellstoffgewebe auf der ersten bewegbaren durchlässigen Fläche (21) umfasst.

3. Vorrichtung (100) nach einem der Ansprüche 1 bis 2, **dadurch gekennzeichnet, dass** die Drosselspaltbreite (Wt) so angepasst ist, dass die Zellstoff-Verteilungsvorrichtung (10) während des Betriebs weitgehend voll gehalten wird.

4. Vorrichtung (100) nach einem der Ansprüche 1 bis 3, **dadurch gekennzeichnet, dass** die Drosselspaltbreite (Wt) so angepasst ist, dass während des Betriebs ein Innendruck innerhalb der Zellstoff-Verteilungsvorrichtung (10) erzeugt wird.

5. Vorrichtung (100) nach Anspruch 1, **dadurch gekennzeichnet, dass** die bewegbare Drosselvorrichtung (32) ein oder mehrere Längssegmente umfasst.

6. Vorrichtung (100) nach einem der Ansprüche 1 bis 5, **dadurch gekennzeichnet, dass** die bewegbare Drosselvorrichtung (32) eine flexible oder schwenkbare Platte (37) umfasst.

7. Vorrichtung (100) nach einem der Ansprüche 1 bis 6, **dadurch gekennzeichnet, dass** die bewegbare Drosselvorrichtung (32) mindestens eine Platte umfasst, die mit einem Spiel (35) hinter der Drossel (31) angeordnet ist.

8. Vorrichtung (100) nach einem der Ansprüche 1 bis 7, **dadurch gekennzeichnet, dass** die bewegbare Drosselvorrichtung (32) mittels mindestens einem aus der folgenden Gruppe bewegbar ist: mindestens einer Stange (33), mindestens einer Platte (36), mindestens einer exzentrischen Scheibe (38) auf einer Welle.

9. Vorrichtung (100) nach einem der Ansprüche 1 bis 4, **dadurch gekennzeichnet, dass** die Drosselspaltbreite (Wt) so eingerichtet ist, dass sie während des Betriebs fixiert ist, und dass die Drosselspaltbreite (Wt) so eingerichtet ist, dass sie durch Auswählen eines austauschbaren Teils, vorzugsweise einer geeigneten Anzahl an Passelementen eingestellt wird.

10. Vorrichtung (100) nach einem der Ansprüche 1 bis 9, **dadurch gekennzeichnet, dass** die Vorrichtung (100) mit einem Mittel zum automatischen Steuern der Drosselspaltbreite (Wt) in Abhängigkeit von mindestens einem Parameter versehen ist.

11. Vorrichtung (100) nach Anspruch 10, **dadurch gekennzeichnet, dass** der mindestens eine Parameter mindestens einer aus der folgenden Gruppe ist: Füllstand der Zellstoff-Verteilungsvorrichtung (10), Druck in der Zellstoff-Verteilungsvorrichtung (10), Verhältnis zwischen dem Zellstoff-Volumenstrom in die Zellstoff-Verteilungsvorrichtung (10) und dem Zellstoff-Volumenstrom aus der Zellstoff-Verteilungsvorrichtung (10) heraus, Temperatur in der Zellstoff-Verteilungsvorrichtung (10), Druck in dem Behälter (22), Zellstoffstand in den Enden der ersten bewegbaren durchlässigen Fläche (21).

## Revendications

1. Appareil (100) de lavage et/ou d'essorage de pâte de cellulose, lequel appareil (100) comprend une première surface perméable (21) mobile ; une paroi de chambre de transport de pâte (22) et une chambre de transport de pâte (25), laquelle chambre de transport de pâte (25) présente un écartement de chambre (Wv) entre la paroi de chambre de transport de pâte (22) et la première surface perméable (21) mobile ; et un dispositif distributeur de pâte (10), comprenant une entrée (11) et une sortie (12), lequel dispositif distributeur de pâte (10) est agencé pour distribuer la pâte sur la première surface perméable (21) mobile en la faisant passer par sa sortie (12), **caractérisé en ce que**
la chambre de transport de pâte (25) est pourvue d'un étranglement local (31) présentant une largeur d'étranglement (Wt), agencé à une distance de 0 à 0,5 m de la sortie (12) du dispositif distributeur de pâte (10), **en ce que**
une seconde surface perméable (14'), destinée à l'essorage initial, est disposée en amont de l'étranglement local (31), la seconde surface perméable (14') consistant en un segment de la première surface perméable (21) mobile situé au voisinage de la sortie (12) du dispositif distributeur de pâte (10), et en amont de l'étranglement (31), et **en ce que**
la paroi de chambre de transport de pâte (22) est pourvue d'un dispositif (32) d'étranglement mobile pour ajuster la largeur de l'étranglement (Wt), la largeur (Wt) de l'étranglement étant conçue de telle sorte que le débit volumique de pâte pénétrant dans le dispositif distributeur de pâte (10) soit supérieur ou égal au débit volumique de pâte sortant du dispositif distributeur de pâte (10) en cours de fonctionnement, **en ce que**
la première surface perméable (21) mobile est une première surface perméable (21) rotative d'un rouleau de presse (20), et **en ce que**
le dispositif distributeur de pâte (10) est agencé au niveau d'une partie supérieure du rouleau de presse.

2. Appareil (100) selon la revendication 1, **caractérisé en ce que** le dispositif distributeur de pâte (10) comprend aussi un moyen pour transformer la pâte en une feuille continue de pâte sur la première surface perméable (21) mobile.

3. Appareil (100) selon l'une quelconque des revendications 1 et 2, **caractérisé en ce que** la largeur (Wt) de l'étranglement est conçue de telle sorte que le dispositif distributeur de pâte (10) soit maintenu sensiblement plein en cours de fonctionnement.

4. Appareil (100) selon l'une quelconque des revendications 1 à 3, **caractérisé en ce que** la largeur (Wt) de l'étranglement est conçue de façon qu'une pression interne soit créée à l'intérieur du dispositif distributeur de pâte (10) en cours de fonctionnement.

5. Appareil (100) selon la revendication 1, **caractérisé en ce que** le dispositif (32) d'étranglement mobile comprend un ou plusieurs segments longitudinaux.

6. Appareil (100) selon l'une quelconque des revendications 1 à 5, **caractérisé en ce que** le dispositif (32) d'étranglement mobile comprend une plaque (37) flexible ou pivotante.

7. Appareil (100) selon l'une quelconque des revendications 1 à 6, **caractérisé en ce que** le dispositif (32) d'étranglement mobile comprend au moins une plaque présentant un dégagement (35) en aval de l'étranglement (31).

8. Appareil (100) selon l'une quelconque des revendications 1 à 7, **caractérisé en ce que** le dispositif (32) d'étranglement mobile est mobile au moyen d'un élément du groupe consistant en au moins une tige (33), au moins une plaque (36), et au moins un galet excentrique (38) sur un arbre.

9. Appareil (100) selon l'une quelconque des revendications 1 à 4, **caractérisé en ce que** la largeur (Wt) de l'étranglement est conçue pour être fixe en cours de fonctionnement, et **en ce que** la largeur (Wt) de l'étranglement est conçue pour être définie par sélection d'une pièce échangeable, de préférence un nombre approprié de cales.

10. Appareil (100) selon l'une quelconque des revendications 1 à 9, **caractérisé en ce que** l'appareil (100) est pourvu d'un moyen de commande automatique de la largeur (Wt) de l'étranglement, en fonction d'au moins un paramètre.

11. Appareil (100) selon la revendication 10, **caractérisé en ce que** l'au moins un paramètre est au moins un paramètre du groupe consistant en le niveau de remplissage du dispositif distributeur de pâte (10), la pression régnant dans le dispositif distributeur de pâte (10), le rapport entre le débit volumique de la pâte pénétrant dans le dispositif distributeur de pâte (10) et le débit volumique de pâte sortant du dispositif distributeur de pâte (10), la température régnant dans le dispositif distributeur de pâte (10), la pression régnant dans la cuve (22) et le niveau de pâte aux extrémités de la première surface perméable (21).
